# FASCICULE DE BREVET EUROPEEN

(11) **EP 0 390 670 B1**
(45) Date de publication et mention de la délivrance du brevet: **28.04.1993**
(21) Numéro de dépôt: 90400831.5
(22) Date de dépôt: 27.03.1990
(51) Int. Cl.: F16F 9/50

(54) **Dispositif amortisseur variable automatique perfectionné**
Automatisch veränderliche Dämpfungsvorrichtung
Modified damping device with automatically variable damping

(30) Priorité: 28.03.1989 FR 8904012
(43) Date de publication de la demande: 03.10.1990
(73) Titulaire: AUTOMOBILES PEUGEOT, 75116 Paris (FR); AUTOMOBILES CITROEN, 92200 Neuilly-sur-Seine (FR)
(72) Inventeur: Edwige, François, F-92800 Puteaux (FR)
(74) Mandataire: Durand, Yves Armand Louis

(56) Documents cités:
- EP-A- 0 044 545
- EP-A- 0 115 174
- EP-A- 0 147 242
- EP-A- 0 264 324
- EP-A- 0 346 186
- DE-A- 2 200 579
- DE-B- 1 093 145
- FR-A- 1 442 533

## Description

La présente invention a essentiellement pour objet un dispositif amortisseur variable automatique perfectionné destiné à équiper les suspensions de véhicule automobile et qui est interposé entre un vérin de suspension et un accumulateur hydropneumatique.

On connaît déjà d'après le document FR-A-2 605 073 et selon le préambule de la revendication 1 un dispositif amortisseur comprenant, d'une manière générale, un bâti dans lequel est monté un premier amortisseur, un piston portant un second amortisseur en série avec le premier amortisseur, une première entretoise attelée au deuxième amortisseur et montée coulissante par rapport à une deuxième entretoise portant un clapet qui peut être sollicité par un ressort pour coopérer avec un siège ménagé dans ladite deuxième entretoise et se prolongeant par un conduit solidaire du premier amortisseur et communiquant avec le vérin de suspension.

Toutefois, dans le dispositif ci-dessus, l'amortissement des vibrations de faible amplitude à fréquences élevées se produisant lors des déplacements verticaux des roues ne pouvait pas être réalisé, de sorte que lesdites vibrations demeuraient transmises à la caisse ce qui, comme on le comprend, nuisait au confort des passagers.

Aussi, la présente invention a pour but de combler cette lacune en équipant un dispositif amortisseur du type ci-dessus de perfectionnements aptes à réaliser efficacement l'amortissement des petites vibrations à fréquences élevées.

A cet effet, l'invention a pour objet un dispositif amortisseur variable automatique perfectionné et interposé entre un vérin de suspension de véhicule automobile et un accumulateur hydropneumatique, du type comprenant un bâti dans lequel est monté un premier amortisseur, un piston portant un second amortisseur en série avec le premier amortisseur, une première entretoise attelée au deuxième amortisseur et montée coulissante par rapport à une deuxième entretoise portant un clapet qui est sollicité par un ressort pour coopérer avec un siège ménagé dans ladite deuxième entretoise et se prolongeant par un conduit solidaire du premier amortisseur et communiquant avec le vérin de suspension, caractérisé en ce que ledit premier amortisseur est monté flottant dans le bâti pour réaliser l'amortissement des vibrations de faibles amplitudes à fréquence élevée lors des débattements verticaux des roues du véhicule.

Suivant une autre caractéristique de ce dispositif, le premier amortisseur est monté dans un chambrage du bâti entre deux anneaux élastiques.

Ces anneaux élastiques sont de préférence maintenus contre des épaulements prévus sur le premier amortisseur.

Selon encore une autre caractéristique de l'invention, le chambrage précité comporte, de part et d'autre du premier amortisseur, un épaulement dans lequel vient buter une cale servant d'appui aux anneaux élastiques.

On précisera encore ici que la deuxième entretoise portant le clapet précité est solidaire de et mobile avec le premier amortisseur flottant précité.

Suivant encore une autre caractéristique de l'invention, le ressort sollicitant le clapet porté par la deuxième entretoise est logé dans cette entretoise et prend appui entre elle et ledit clapet.

Le ressort précité, suivant une réalisation préférée, prend appui sur un élément formant fond de la deuxième entretoise et situé à l'opposé du siège de clapet.

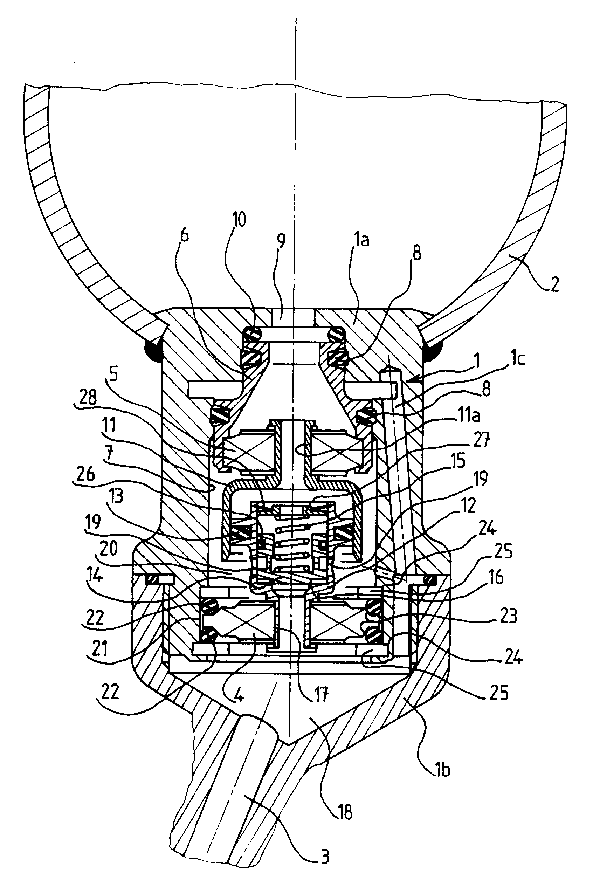

Mais d'autres caractéristiques et avantages de l'invention apparaîtront mieux dans la description détaillée qui suit et se réfère au dessin unique annexé, donné uniquement à titre d'exemple, et illustrant en coupe axiale le dispositif amortisseur conforme à cette invention.

En se reportant à la figure unique annexée, on voit un dispositif amortisseur comprenant un bâti 1 constitué d'une partie supérieure 1a raccordée à un accumulateur hydropneumatique 2, et d'une partie inférieure 1b raccordée par un conduit 3 à un vérin de suspension de véhicule automobile, non représenté.

Un premier amortisseur 4 est monté en partie basse du bâti 1, tandis qu'un deuxième amortisseur 5, en série avec le premier amortisseur 4 est porté, en partie haute du bâti 1, par un piston 6 susceptible de coulisser dans l'alésage 7 du bâti 1 par déformation des joints 8. La partie supérieure 1a du bâti 1 est en communication avec l'accumulateur hydropneumatique 2 via un orifice 9 pratiqué dans ladite partie supérieure. On a montré en 10 un joint torique formant butée supérieure pour le piston 6.

Une première entretoise 11 en forme de cloche est attelée par sa partie 11a au deuxième amortisseur 5. Cette première entretoise est montée coulissante par rapport à une deuxième entretoise 12, et cela par l'intermédiaire d'un joint 13 porté par ladite deuxième entretoise.

Cette deuxième entretoise 12 porte un clapet 14 qui est sollicité par un ressort 15 en appui contre un siège 16 ménagé dans cette entretoise et se prolongeant par un conduit 17 solidaire du premier amortisseur 4 et communiquant avec le vérin de suspension (non représenté) via une chambre 18, et le conduit 3.

On a montré en 19 des perçages pratiqués dans la deuxième entretoise 12 et susceptibles de faire passer l'huile du vérin de suspension via le conduit 17 dans une chambre 20 située au-dessus du premier amortisseur 4, lorsque le clapet 14 est dégagé de son siège 16. Un conduit 1c dans le bâti 1 relie le vérin de suspension via la chambre 18 à la chambre définie par l'alésage 7 du bâti au-dessus de l'amortisseur 4.

Les amortisseurs 4 et 5 sont d'un type connu en soi, en ce sens qu'ils comportent chacun, bien que cela ne soit pas représenté, des conduits calibrés traversants avec clapets permettant la circulation de l'huile dans un sens ou dans l'autre suivant que le débit s'établit dans un sens ou dans l'autre.

Mais toutes les dispositions ci-dessus sont, d'une manière générale, bien connues, et à cet égard, on pourra utilement se reporter au document FR-A-2 605 073 cité précédemment.

Conformément à l'invention, le premier amortisseur 4 est un amortisseur monté flottant dans un chambrage 21 en partie basse du bâti 1, ce qui n'était pas le cas dans le document cité plus haut où ledit amortisseur était monté fixe dans le bâti 1.

Plus précisément, et selon l'invention, l'amortisseur 4 est monté flottant entre deux anneaux élastiques 22.

Ces anneaux élastiques sont maintenus directement et automatiquement en appui sur l'amortisseur 4 grâce à des épaulements 23 prévus sur ledit amortisseur.

En outre, le chambrage 21, formé dans la partie basse de la partie supérieure 1a du bâti 1, comporte, lui aussi, des épaulements 24 dans lesquels viennent buter des cales 25 servant de surfaces d'appui aux anneaux élastiques 22 et pouvant être utilisées pour la réalisation de la cote d'empilage de l'ensemble formant amortisseur flottant. Cet ensemble peut être maintenu par sertissage ou tout autre forme appropriée de fixation ou de blocage sans sortir du cadre de l'invention.

Comme on le voit bien sur la figure, la deuxième entretoise 12 portant le clapet 14 est solidaire par le conduit 17 de l'amortisseur 4 qui, lorsqu'il flotte ou se déplace comme on l'expliquera plus loin à propos du fonctionnement, déplace également ladite deuxième entretoise 12 coulissant dans la première entretoise 11 attelée au deuxième amortisseur 5.

Le ressort 15 sollicitant le clapet 14 est avantageusement logé dans la deuxième entretoise 12 et prend appui entre elle et ledit clapet qui peut coulisser de façon étanche dans la deuxième entretoise 12 grâce à un joint 26.

Plus précisément, le ressort 15, comme on le voit bien sur la figure, prend appui sur un élément 27 formant fond de la deuxième entretoise 12, lequel élément est situé à l'opposé du siège 16 du clapet 14 et est retenu sur la deuxième entretoise par un jonc ou analogue de fixation 28.

On expliquera ci-après comment l'amortisseur flottant 4 permet d'obtenir un amortissement efficace lors des débattements verticaux de la roue suivant des amplitudes faibles et des fréquences élevées.

A chaque débattement brusque de la roue, la pression augmente rapidement dans la chambre 18. Cette pression s'exerce alors sur l'amortisseur flottant 4 qui, en appui sur les anneaux élastiques 22 joue en quelque sorte le rôle d'une paroi mobile. Dès lors, l'amortisseur flottant 4 formant paroi mobile se déplace à l'intérieur du chambrage 21, et, en se déplaçant, "absorbe" une partie du liquide, ce qui permet donc d'amortir de façon quasi instantanée les petits débattements à grande fréquence. Il en résulte qu'on minimise ainsi considérablement les efforts transmis à la caisse.

On peut expliquer le fonctionnement de l'amortisseur 4 d'une façon plus précise et comme suit.

Lorsque la pression dans la chambre 18 augmente sous l'effet de petits débattements des roues à fréquences élevées, et lorsque la force de rappel des anneaux élastiques 22 sur l'amortisseur 4 est inférieure à l'effort exercé sur le clapet 14 placé sur le circuit de dérivation, et à la force du ressort 15 exercée sur ledit clapet, l'amortisseur flottant 4 joue alors pleinement son rôle pour "absorber" les petits débattements en question et éviter ainsi la transmission des efforts correspondants à la caisse du véhicule.

Par contre, si la pression continue à augmenter dans la chambre 18, et que l'effort exercé par le liquide sur le clapet 14 est égal ou supérieur à la force exercée par le ressort 15, l'amortisseur flottant 4 n'agit plus, c'est-à-dire n'influence plus l'ensemble du système qui fonctionne comme dans la configuration d'un amortisseur automatique variable tel que celui décrit dans le document FR-A-2 605 073.

Il convient d'observer encore ici que le déplacement de l'amortisseur flottant 4 est limité dans les deux sens par l'écrasement des anneaux élastiques 22, de sorte qu'il se retrouve dans sa position médiane dès que les pressions dans les chambres 18 et 20 sont égales.

On a donc réalisé suivant l'invention un dispositif amortisseur variable automatique auquel est avantageusement intégré un amortisseur flottant permettant un amortissement efficace des petits débattements à grandes fréquences des roues d'un véhicule, de sorte que des efforts considérablement moindres sont transmis à la caisse du véhicule.

## Revendications

1. Dispositif amortisseur variable automatique perfectionné et interposé entre un vérin de suspension de véhicule automobile et un accumulateur hydropneumatique (2), du type comprenant un bâti (1) dans lequel est monté un premier amortisseur (4), un piston (6) portant un second amortisseur (5) en série avec le premier amortisseur (4), une première entretoise (11) attelée au deuxième amortisseur (5) et montée coulissante par rapport à une deuxième entretoise (12) portant un clapet (14) qui est sollicité par un ressort (15) pour coopérer avec un siège (16) ménagé dans ladite deuxième entretoise (12) et se prolongeant par un conduit (17) solidaire du premier amortisseur (4) et communiquant avec le vérin de suspension, caractérisé en ce que le premier amortisseur (4) est monté flottant dans un chambrage (21) du bâti (1) entre deux anneaux élastiques (22).

2. Dispositif selon la revendication 1, caractérisé en ce que les anneaux élastiques (22) sont maintenus contre des épaulements (23) prévus sur le premier amortisseur (4).

3. Dispositif selon la revendication 1 ou 2, caractérisé en ce que le chambrage (21) précité comporte, de part et d'autre du premier amortisseur (4) un épaulement (24) dans lequel vient buter une cale (25) servant d'appui aux anneaux élastiques (22).

4. Dispositif selon l'une des revendications précédentes, caractérisé en ce que la deuxième entretoise (12) portant le clapet précité (14) est solidaire de et mobile avec le premier amortisseur flottant précité (4).

5. Dispositif selon l'une des revendications précédentes, caractérisé en ce que le ressort (15) sollicitant le clapet (14) porté par la deuxième entretoise (12) est logé dans cette entretoise et prend appui entre elle et ledit clapet.

6. Dispositif selon la revendication 5, caractérisé en ce que le ressort précité (15) prend appui sur un élément formant fond (27) de la deuxième entretoise (12) et situé à l'opposé du siège (16) de clapet (14).

## Patentansprüche

1. Zwischen einem Aufhängungskraftzylinder eines Kraftfahrzeugs und einem Hydro-Blasenspeicher (2) gefügte vervollkommene automatische veränderliche Dämpfungsvorrichtung, der ein Gehäuse (1) aufweisenden Gattung, in welchem ein erster Dämpfer (4), ein einen zweiten mit dem ersten Dämpfer (4) in Reihe geschalteten Dämpfer (5) tragender Kolben (6), ein erstes mit dem zweiten Dämpfer (5) gekoppeltes Zwischenstück (11), das gleitbar in Bezug auf ein ein Ventil (14) tragendes zweites Zwischenstück (12) angeordnet ist, welches durch eine Feder (15) beaufschlagt wird, um mit einem, in dem besagten zweiten Zwischenstück (12) gebildeten Sitz (16) zusammenzuwirken und sich durch eine mit dem ersten Dämpfer (4) fest verbundene und mit dem Aufhängungskraftzylinder in Verbindung stehende Leitung (17) verlängert, angeordnet sind, dadurch gekennzeichnet, dass der erste Dämpfer (4) schwebend in einer Einsenkung (21) des Gehäuses (1) zwischen zwei elastischen Ringen (22) angeordnet ist.

2. Vorrichtung nach Anspruch 1, dadurch gekennzeichnet, dass die elastischen Ringe (22) gegen an dem ersten Dämpfer (4) vorgesehene Schultern (23) gehalten werden.

3. Vorrichtung nach Anspruch 1 oder 2, dadurch gekennzeichnet, dass die vorgenannte Einsenkung (21) beiderseits des ersten Dämpfers (4) eine Schulter (24) aufweist, in welcher eine als Abstützung für die elastischen Ringe (22) dienende Unterlage (25) zum Anschlag kommt.

4. Vorrichtung nach einem der vorangehenden Ansprüche, dadurch gekennzeichnet, dass das zweite das vorgenannte Ventil (14) tragende Zwischenstück (12) mit dem vorgenannten ersten schwebenden Dämpfer (4) fest verbunden und beweglich ist.

5. Vorrichtung nach einem der vorangehenden Ansprüche, dadurch gekennzeichnet, dass die das durch den zweiten Dämpfer (12) getragene Ventil (14) beaufschlagende Feder (15) in diesem Zwischenstück untergebracht ist und sich zwischen diesem und dem besagten Ventil abstützt.

6. Vorrichtung nach Anspruch 5, dadurch gekennzeichnet, dass die vorgenannte Feder (15) sich an einem den Boden des zweiten Zwischenstücks (12) bildenden und auf der dem Sitz (16) des Ventils (14) entgegensetzten Seite liegenden Element (27) abstützt.

## Claims

1. Improved automatic variable damping device interposed between a suspension jack of an automotive vehicle and a hydropneumatic accumulator (2), of the type comprising a frame (1) in which is mounted a first damper (4), a piston (6) carrying a second damper (5) in series with the first damper (4), a first tie member (11) coupled to the second damper (5) and slideably mounted with respect to a second tie member (12) carrying a valve (14) which is acted upon by a spring (15) to co-operate with a seat (16) formed in the said second tie member (12) and extending itself with a duct (17) made fast to the first damper (4) and communicating with a suspension jack, characterized in that the first damper (4) is mounted in floating relationship in a recess (21) of the frame (1) between two elastic rings (22).

2. Device according to claim 1, characterized in that the elastic rings (22) are held against shoulders (23) provided on the first damper (4).

3. Device according to claim 1 or 2, characterized in that the aforesaid recess (21) comprises on either side of the first damper (4), a shoulder (24) against which is abutting a shim (25) serving as a bearing for the elastic rings (22).

4. Device according to one of the foregoing claims, characterized in that the second tie member (12) carrying the aforesaid valve (14) is made fast to and movable with the aforesaid first floating damper (4).

5. Device according to one of the foregoing claims, characterized in that the spring (15) acting upon the valve (14) carried by the second tie member (12) is accommodated within this tie member and is bearing between the latter and the said valve.

6. Device according to claim 5, characterized in that the aforesaid spring (15) is bearing upon a bottom element (27) of the second tie member (12), located opposite from the seat (16) of the valve (14).
